# EUROPEAN PATENT SPECIFICATION

(11) **EP 3 211 879 B1**
(45) Date of publication and mention of the grant of the patent: **06.11.2024**
(21) Application number: 17155763.0
(22) Date of filing: 13.02.2017
(51) Int. Cl.: H04N 23/61, H04N 23/611, H04N 23/60, H04N 23/63

(54) **METHOD AND DEVICE FOR AUTOMATICALLY CAPTURING PHOTOGRAPH, ELECTRONIC DEVICE**
VERFAHREN UND VORRICHTUNG ZUR AUTOMATISCHEN ERFASSUNG VON FOTOS, ELEKTRONISCHE VORRICHTUNG
PROCÉDÉ ET DISPOSITIF PERMETTANT DE CAPTURER AUTOMATIQUEMENT UNE PHOTOGRAPHIE, DISPOSITIF ÉLECTRONIQUE

(30) Priority: 24.02.2016 CN 201610101967
(43) Date of publication of application: 30.08.2017
(73) Proprietor: Beijing Xiaomi Mobile Software Co., Ltd., Beijing 100085 (CN)
(72) Inventor: LIU, Lin, BEIJING, 100085 (CN); ZHANG, Haipo, BEIJING, 100085 (CN); FENG, Jingmin, BEIJING, 100085 (CN)
(74) Representative: Cabinet Beau de Loménie

(56) References cited:
- EP-A1- 2 034 722
- WO-A1-2008/142478
- WO-A1-2015/010515
- CN-A- 104 540 004
- CN-A- 104 936 003
- KR-A- 20150 032 163
- US-A1- 2007 091 194
- US-A1- 2008 187 185

## Description

### TECHNICAL FIELD

The present invention relates to a terminal technology field, and more particularly, to a method and a device for automatically capturing a photograph, and an electronic device.

### BACKGROUND

With the growing popularity of shooting photographs, it becomes a point of interest for a user to evaluate an appearance value when shooting photographs. A facial appearance value will be calculated by an appearance value evaluation algorithm after a face of the user is recognized, so as to ensure that the user may be shot at such an angle that a higher appearance value is obtained. In the related art, the user finds such angle by trying at different angles when shooting photographs and then manually triggers a photograph-shooting operation, which however easily results in an angle change of the face of the user within a photograph-shooting range, thus missing a scene where a high appearance value may be obtained.

US 2008/0187185 A1 discloses a digital still camera which includes a CCD image sensor for photographing an object image by photoelectric conversion, to obtain image data A face detector determines a face feature value of a human face at an object image by image recognition according to the image data, and detects the face. A stability checker monitors the face feature value, and outputs stable result information when the face feature value is within a prescribed range consecutively for a predetermined length or consecutively for a predetermined number of times. A controller automatically starts image pickup of the CCD image sensor when the stable result information is output by the first stability checker.

### SUMMARY

In order to overcome the problems existing in the related art, embodiments of the present invention provide a method and a device for automatically capturing a photograph, and an electronic device, so as to ensure a face photograph shot is of a high appearance value.

According to a first aspect of embodiments of the present invention, there is provided a method for automatically capturing a photograph, as defined in independent claim 1.

According to a second aspect of embodiments of the present invention, there is provided a device for automatically capturing a photograph, as set out in independent claim 6.

According to a third aspect of embodiments of the present invention, there is provided an electronic device, as defined in claim

Preferred embodiments of the invention are set out in the dependent claims.

The technical solutions provided in embodiments of the present invention may include the following beneficial effects. A photograph-shooting quality is quantized by the facial appearance value, which avoids a subjective evaluation of the user for obtaining a photograph with a higher appearance value from photographs shot at different shooting angles. If the facial appearance value is greater than the preset threshold, the photograph on the display interface is acquired and stored, which avoids a change of shooting angle due to a manual trigger of a shutter button and thus avoids missing a scene where a high appearance value may be obtained, thereby leaving more exciting moments for the user.

It is to be understood that both the foregoing general description and the following detailed description are exemplary and explanatory only, and shall not be construed to limit the present invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1A is a flow chart showing a method for automatically capturing a photograph according to an example embodiment.
Fig. 1B is a schematic diagram showing a first scene in which a method for automatically capturing a photograph is implemented according to an example embodiment.
Fig. 1C is a schematic diagram showing a second scene in which a method for automatically capturing a photograph is implemented according to an example embodiment.
Fig. 2A is a first flow chart showing determining whether to trigger an appearance value calculation according to a first example embodiment.
Fig. 2B is a second flow chart showing determining whether to trigger an appearance value calculation according to a first example embodiment.
Fig. 3 is a flow chart showing a method for automatically capturing a photograph according to a second example embodiment.
Fig. 4 is a flow chart showing a method for automatically capturing a photograph according to a third example embodiment.
Fig. 5 is a flow chart showing how to determine a preset threshold according to a fourth example embodiment.
Fig. 6 is a flow chart showing a method for automatically capturing a photograph according to a fifth example embodiment.
Fig. 7 is a block diagram showing a device for automatically capturing a photograph according to an example embodiment.
Fig. 8 is a block diagram showing another device for automatically capturing a photograph according to an example embodiment.
Fig. 9 is a block diagram showing further another device for automatically capturing a photograph according to an example embodiment.
Fig. 10 is a block diagram showing yet another device for automatically capturing a photograph according to an example embodiment.
Fig. 11 is a block diagram showing a device suitable for automatically capturing a photograph according to an example embodiment.

### DETAILED DESCRIPTION

Example embodiments will be described in detail herein, and examples thereof are illustrated in accompanying drawings. The following description refers to the accompanying drawings in which the same numbers in different drawings represent the same or similar elements unless otherwise represented. The implementations set forth in the following description of example embodiments do not represent all implementations consistent with the invention. Instead, they are merely examples of apparatuses and methods consistent with aspects related to the invention as recited in the appended claims.

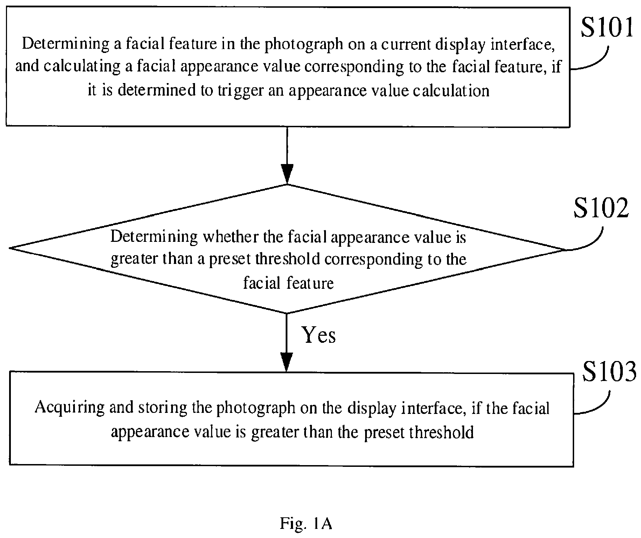

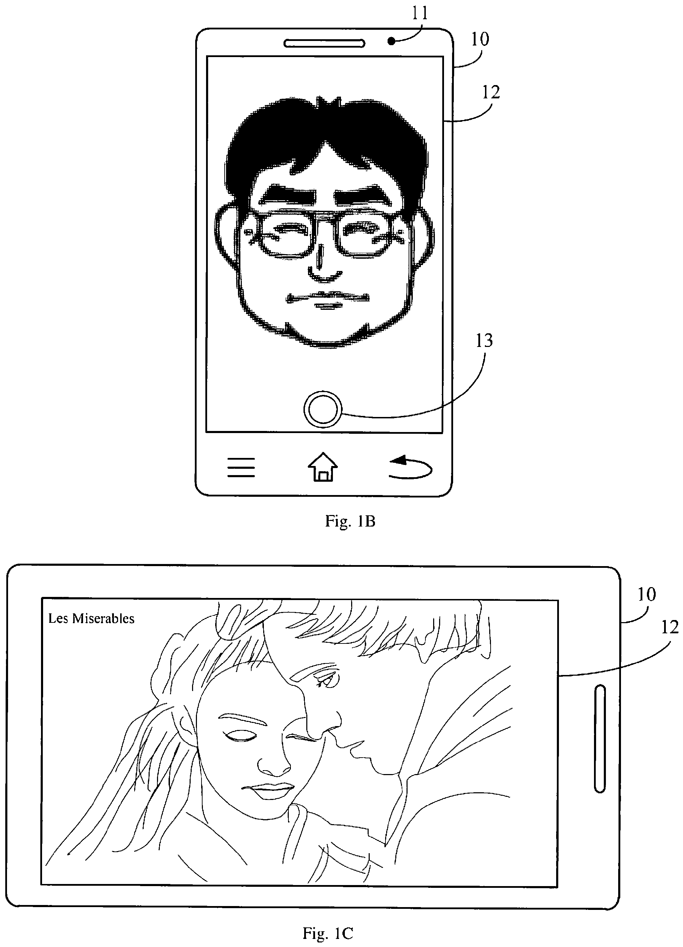

Fig. 1A is a flow chart showing a method for automatically capturing a photograph according to an example embodiment, Fig. 1B is a schematic diagram showing a first scene in which a method for automatically capturing a photograph is implemented according to an example embodiment, and Fig. 1C is a schematic diagram showing a second scene in which a method for automatically capturing a photograph is implemented according to an example embodiment. The method for automatically capturing a photograph may be applied in an electronic device (for example, smart phone, tablet computer etc.) and may be achieved by installing an application on the electronic device. As shown in Fig. 1A, the method for automatically capturing a photograph includes steps S101-S103 as follows.

In step S101, a facial feature in the photograph on a current display interface is determined and a facial appearance value corresponding to the facial feature is calculated, if it is determined to trigger an appearance value calculation.

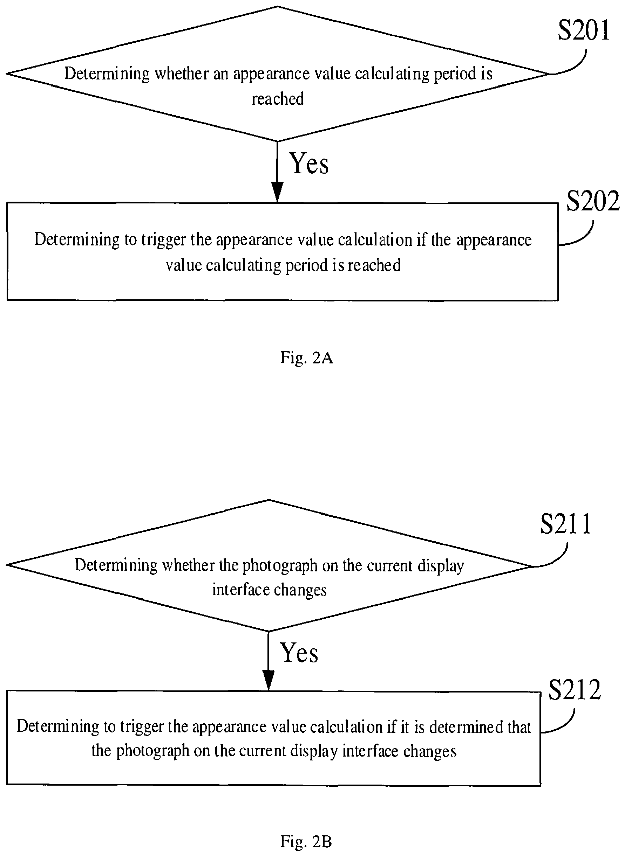

In an embodiment, with respect to how to determine a condition for triggering an appearance value calculation, reference can be made to the following description of an embodiment shown in Fig. 2, which will not be elaborated here. In an embodiment, the facial feature in the photograph on the current display interface may be obtained by a face detection algorithm in the related art, and the facial appearance value corresponding to the facial feature may be calculated according to an appearance value algorithm in the related art, which will not be elaborated herein.

In step S102, it is determined whether the facial appearance value is greater than a preset threshold corresponding to the facial feature. If the facial appearance value is greater than the preset threshold, step S103 is executed, if the facial appearance value is lower than or equal to the preset threshold, step S101 is re-executed.

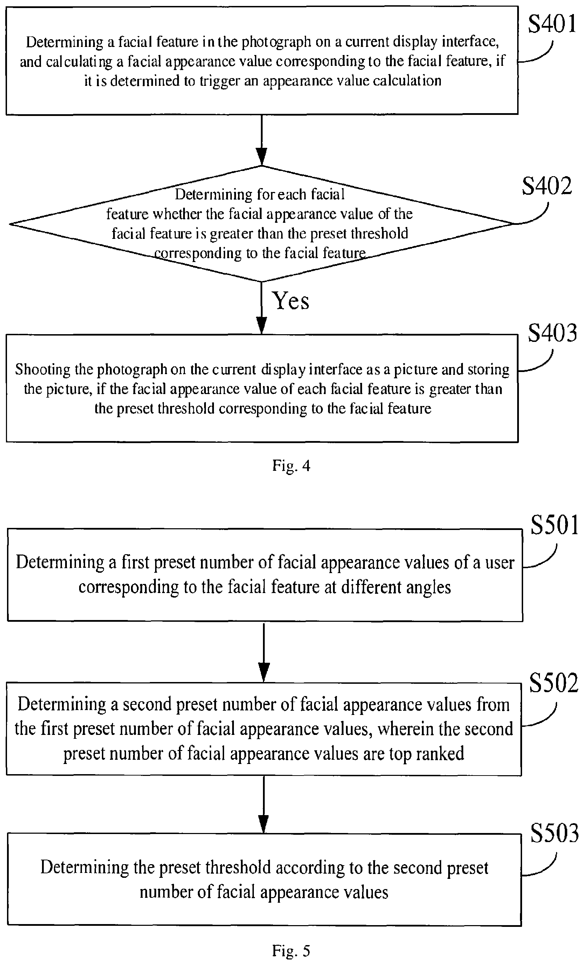

Z p According to the invention, with respect to a method for determining the preset threshold, reference can be made to the following description of an embodiment shown in Fig. 5, which will not be elaborated here.

In step S103, if the facial appearance value is greater than the preset threshold, the photograph on the display interface is acquired and stored.

As an example scene, as shown in Fig. 1B, when a user A needs to take a selfie with an electronic device 10, a front camera 11 of the electronic device 10 captures image information of the user at different shooting angles. If a facial feature of the user A in a photograph on a current display interface of the electronic device 10 is detected, a facial appearance value corresponding to the facial feature of the user A is calculated. If the facial appearance value of the user A is greater than a preset threshold corresponding to the user A, the photograph on the display interface 12 of the electronic device 10 is acquired and stored, which may ensure that a higher facial appearance value may be achieved in the shot photograph.

As another example scene, as shown in Fig. 1C, when a user B plays a video file (such as Les Miserables) with an electronic device 10, facial features of users C and D in a photograph on a current display interface of the electronic device 10 may be detected, and a facial appearance value corresponding to the facial feature of the user C and a facial appearance value corresponding to the facial feature of the user D are calculated. If both the facial appearance value of the user C and the facial appearance value of the user D are greater than a same preset threshold, or if the facial appearance value of the user C is greater than a preset threshold corresponding to the user C and the facial appearance value of the user D is greater than a preset threshold corresponding to the user D, the photograph on the display interface 12 of the electronic device 10 is acquired and stored, such that the photograph of users C and D with highest appearance values in the video file may be obtained.

In this embodiment, a photograph-shooting quality is quantized by the facial appearance value, which avoids a subjective evaluation of the user for obtaining a photograph with a higher appearance value from photographs shot at different shooting angles. If the facial appearance value is greater than the preset threshold, the photograph on the display interface is acquired and stored, which avoids a change of shooting angle due to a manual trigger of a shutter button and thus avoids missing a scene where a high appearance value may be obtained, thereby leaving more exciting moments for the user.

Specifically, with respect to how to automatically acquire the photograph, reference can be made to embodiments hereinafter.

To the end, the above method provided in embodiments of the present disclosure may avoid a subjective evaluation of the user for obtaining a photograph with a higher appearance value from photographs shot at different shooting angles, and avoid a change of shooting angle due to a manual trigger of a shutter button and thus avoid missing a scene where a high appearance value may be obtained, thereby leaving more exciting moments for the user.

In the following, the technical solution provided by embodiments of the present disclosure will be explained by means of specific embodiments.

Fig. 2A is a first flow chart showing determining whether to trigger an appearance value calculation according to a first example embodiment, and Fig. 2B is a second flow chart showing determining whether to trigger an appearance value calculation according to a first example embodiment. As shown in Fig. 2A, the following steps are included.

In step S201, it is determined whether an appearance value calculating period is reached according to a preset calculating frequency.

In an embodiment, the preset calculating frequency may be lower than an image capturing frequency of a camera of an electronic device. For example, if the camera captures 20 images per second, the preset calculating frequency may be set as calculating 10 facial appearance values per second. It will be appreciated to those skilled in the art that, number values of 20 or 10 in the present disclosure is exemplary and explanatory only, and shall not be construed to limit the technical solution of the present disclosure.

In step S202, it is determined to trigger the appearance value calculation if the appearance value calculating period is reached.

As the camera of the electronic device captures images in real time, the photograph on the current display interface of the electronic device will change with a movement or angle change of the electronic device. If the appearance value calculating period is reached, it is determined to trigger the appearance value calculation, which may ensure updating the facial appearance value of the photograph on the current display interface in time.

As shown in Fig. 2B, the following steps are included.

In step S211, it is determined whether the photograph on the current display interface changes.

In an embodiment, whether the photograph on the current display interface changes may be determined by detecting whether a reference feature of the photograph on the current display interface changes, in which the reference feature may be, for example, a light intensity value, the facial feature, or a shooting angle of the face of the same user.

In step S212, it is determined to trigger the appearance value calculation, if it is determined that the photograph on the current display interface changes.

As an example, if a change of the light intensity value exceeds a threshold, it indicates that illumination in environment where the electronic device is changes, in this case, the facial appearance value will change, and thus it is required to trigger the appearance value calculation, so as to ensure real-time of the facial appearance value. As another example, the electronic device determines whether there is a need to retrigger the appearance value calculation by detecting a matching degree between image contents of the image currently detected by the camera and a last image, thus avoiding unnecessary triggering of the appearance value calculation, and reducing calculation complexity of the electronic device.

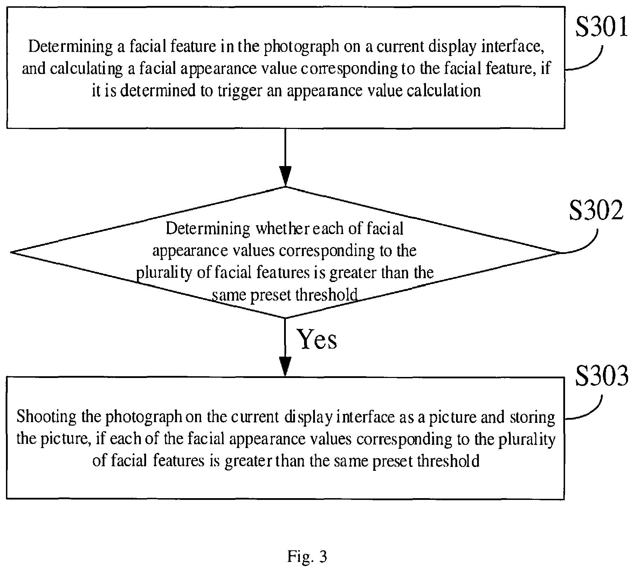

Fig. 3 is a flow chart showing a method for automatically capturing a photograph according to a second example embodiment. In this embodiment, with above method provided by embodiments of the present disclosure, an exemplary description is made by taking such a case in which there are a plurality of facial features in the photograph on the current display interface and the plurality of facial features correspond to a same preset threshold as an example and in combination with Fig. 1C. As shown in Fig. 3, the following steps are included.

In step S301, a facial feature in the photograph on a current display interface is determined and a facial appearance value corresponding to the facial feature is calculated, if it is determined to trigger an appearance value calculation.

In step S302, it is determined whether each of facial appearance values corresponding to the plurality of facial features is greater than the same preset threshold.

In step S303, the photograph on the current display interface is shot and stored as a picture, if each of the facial appearance values corresponding to the plurality of facial features is greater than the same preset threshold.

As shown in Fig. 1C, facial features of both users C and D are included in the photograph on the current display interface of the electronic device 10, in such a case, a facial appearance value corresponding to the facial feature of the user C and a facial appearance value corresponding to the facial feature of the user D are determined, respectively. If both the facial appearance value of the user C and the facial appearance value of the user D are greater than the same preset threshold, it indicates that the appearance value of each person in the photograph on the current display interface reaches a good level. For example, facial appearance values of both users C and D are above 7.5, and in this case, the photograph on the current display interface may be shot and stored as a picture.

In this embodiment, when each of facial appearance values corresponding to the plurality of facial features is greater than the same preset threshold, the photograph on the current display interface is shot and stored as a picture, which may ensure a higher facial appearance value is achieved for each face in the photograph on the display interface, and avoid the user to store the photograph with higher facial appearance values by manual screenshot or manually triggering a shutter button, thus leaving more exciting moments for the user, and improving user experience.

Fig. 4 is a flow chart showing a method for automatically capturing a photograph according to a third example embodiment. In this embodiment, with above method provided by embodiments of the present disclosure, an exemplary description is made by taking such a case in which there are a plurality of facial features in the photograph on the current display interface and each of the plurality of facial features corresponds to a respective preset threshold as an example and in combination with Fig. 1C. As shown in Fig. 4, the following steps are included.

In step S401, a facial feature in the photograph on a current display interface is determined and a facial appearance value corresponding to the facial feature is calculated, if it is determined to trigger an appearance value calculation.

In step S402, it is determined for each facial feature whether the facial appearance value of the facial feature is greater than the preset threshold corresponding to the facial feature.

In step S403, the photograph on the current display interface is shot and stored as a picture, if the facial appearance value of each facial feature is greater than the preset threshold corresponding to the facial feature.

As shown in Fig. 1C, facial features of both users C and D are included in the photograph on the current display interface of the electronic device 10, in such a case, a facial appearance value corresponding to the facial feature of the user C and a facial appearance value corresponding to the facial feature of the user D may be determined, respectively. A first preset threshold corresponding to user C is needed to be determined for the user C and a second preset threshold corresponding to user D is needed to be determined for the user D. If the facial appearance value of the user C is greater than the first preset threshold, and the facial appearance value of the user D is greater than the second preset threshold, it indicates that the appearance score of each person in the photograph on the current display interface reaches a good level, for example, appearances of both users C and D are in their corresponding good states, respectively.

In this embodiment, as different users have different appearance values, different preset thresholds are set for the plurality of facial features. If each of the facial appearance values of the plurality of users reaches a respective one of corresponding preset thresholds, the photograph on the current display interface is shot and stored as a picture, which may ensure that each user has an optimum appearance state and the most exciting moment is left for each user, thus improving user experience.

Fig. 5 is a flow chart showing how to determine a preset threshold according to the invention. In an embodiment, if it is determined to activate an mode for determining a facial appearance threshold, it is determined to trigger the preset threshold corresponding to the facial feature; in another embodiment, if it is determined to activate a camera to start capturing a photograph, it is determined to trigger the preset threshold corresponding to the facial feature; in yet another embodiment, it is searched whether the preset threshold corresponding to the facial feature is stored after a facial appearance value of the facial feature is calculated, and if it is determined that the preset threshold corresponding to the facial feature is not stored, it is determined to trigger the preset threshold corresponding to the facial feature. Thus, a procedure of this embodiment may be executed. As shown in Fig. 5, the following steps are included.

In step S501, a first preset number of facial appearance values of a user corresponding to the facial feature at different angles are determined.

In step S502, a second preset number of facial appearance values are determined from the first preset number of facial appearance values, in which the second preset number of facial appearance values are top ranked.

In step S503, the preset threshold is determined according to the second preset number of facial appearance values.

As an example, if there is a need to shoot photographs for user A, a statistics is needed to be performed on a first preset number of facial appearance values of user A at different angles. For example, user A is shot at four different angles with 20 photographs for each angle, in specific, 20 photographs with the face of the user turning 30 degrees to the left side, 20 photographs with the face of the user turning 30 degrees to the right side, 20 photographs with raising the user's head by 20 degrees and 20 photographs with lowering the user's head by 20 degrees. That is, a total of 80 photographs are shot for user A, which correspond to 80 (the first preset number of the present disclosure) facial appearance values, from which first 10 (the second preset number of the present disclosure) facial appearance values are selected based on an order of the appearance values from top to low, and an average value of the first 10 facial appearance values is used as a preset threshold of user A. When photograph-shooting or screenshot is to be performed for user A according to embodiments of the present disclosure, the photograph-shooting or screenshot is automatically triggered if the facial appearance value of user A is calculated to be greater than the preset threshold.

In this embodiment, by performing a statistics on the facial appearance values of the user corresponding to the facial feature at different angles to acquire the preset threshold corresponding to the user, it is possible to ensure that different users correspond to different preset thresholds, and thus ensure that photograph-shooting or screenshot is triggered by different appearance values for different users, thereby ensuring that photograph-shooting or screenshot may be triggered with each user reaching an optimum appearance value thereof.

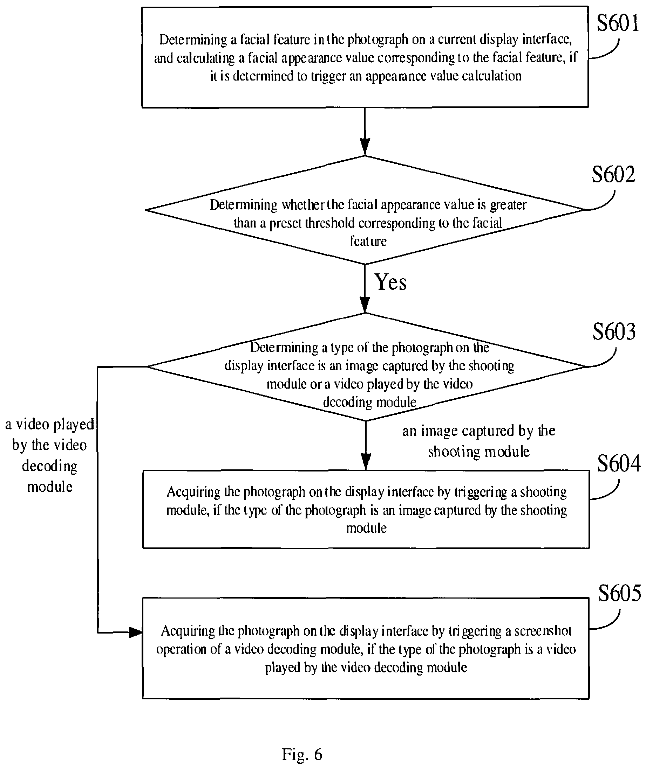

Fig. 6 is a flow chart showing a method for automatically capturing a photograph according to a fifth example embodiment. In this embodiment, with above method provided by embodiments of the present disclosure, an exemplary description is made by taking how to acquire the photograph on the current display as an example. As shown in Fig. 6, the following steps are included.

In step S601, a facial feature in the photograph on a current display interface is determined and a facial appearance value corresponding to the facial feature is calculated, if it is determined to trigger an appearance value calculation.

In step S602, it is determined whether the facial appearance value is greater than a preset threshold corresponding to the facial feature. If the facial appearance value is greater than the preset threshold, step S603 is executed, if the facial appearance value is lower than or equal to the preset threshold, step S601 is re-executed.

With respect to the description related to step S601 and step S602, reference may be made to the above description related to Fig. 1, which will not be elaborated here.

In step S603, if the facial appearance value is greater than the preset threshold, a type of the photograph on the display interface is determined. If the type of the photograph is an image captured by the shooting module, step S604 is executed, and if the type of the photograph is a video played by the video decoding module, step S605 is executed.

In step S604, if the type of the photograph is an image captured by the shooting module, the photograph on the display interface is acquired by triggering a shooting module.

In step S605, if the type of the photograph is a video played by the video decoding module, the photograph on the display interface is acquired by triggering a screenshot operation of the video decoding module.

In an example scene, as shown in Fig. 1B, with respect to an image captured by camera 12, if it is determined by above related embodiments that a facial appearance value in the image is greater than a preset threshold, a photograph on a display interface is acquired by triggering the camera 12, which enables a user to acquire the photograph on the display interface without triggering a shutter button 13.

In another example scene, as shown in Fig. 1C, with respect to a video played by a video decoding module (also referred to video player application), if it is determined by above related embodiments that a facial appearance value is greater than a preset threshold, the photograph on the display interface is acquired by a screenshot operation of the video decoding module, and thus an optimum moment of the user in the video may be captured, which avoids the user from missing an optimum facial state in the video due to a manual screenshot after a subjective judgment by human eyes.

In this embodiment, by determining a type of the photograph on the display interface, acquiring the photograph on the display interface by triggering a shooting module if the type of the photograph is an image captured by the shooting module or acquiring the photograph on the display interface by triggering a screenshot operation of a video decoding module if the type of the photograph is a video played by the video decoding module, it is possible to ensure that the electronic device automatically keep a photograph with a higher appearance value or perform a screenshot operation in a beauty mode, which is convenient to leave a wonderful moment for the user.

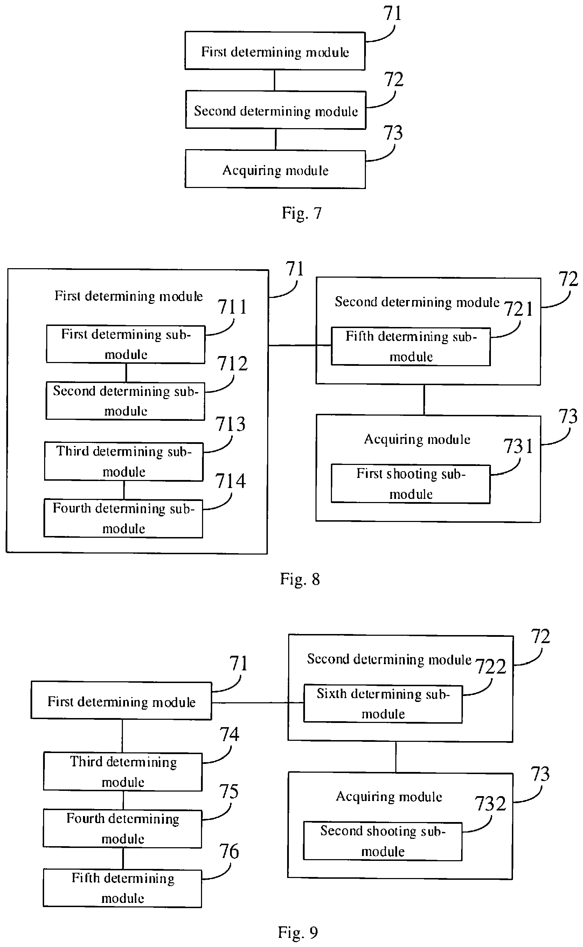

Fig. 7 is a block diagram showing a device for automatically capturing a photograph according to an example embodiment. As shown in Fig. 7, the device for automatically capturing a photograph include:
a first determining module 71, configured to determine a facial feature in the photograph on a current display interface and calculate a facial appearance value corresponding to the facial feature, if it is determined to trigger an appearance value calculation;
a second determining module 72, configured to determine whether the facial appearance value determined by the first determining module 71 is greater than a preset threshold corresponding to the facial feature; and
an acquiring module 73, configured to acquire and store the photograph on the display interface, if it is determined by the second determining module 72 that the facial appearance value is greater than the preset threshold.

Fig. 8 is a block diagram showing another device for automatically capturing a photograph according to an example embodiment. As shown in Fig. 8, on the basis of above embodiment shown in Fig. 7, in an embodiment, the first determining module 71 may include:
a first determining sub-module 711, configured to determine whether an appearance value calculating period is reached according to a preset calculating frequency;
a second determining sub-module 712, configured to determine to trigger the appearance value calculation if it is determined by the first determining sub-module 711 that the appearance value calculating period is reached; or
a third determining sub-module 713, configured to determine whether the photograph on the current display interface changes;
a fourth determining sub-module 714, configured to determine to trigger the appearance value calculation if it is determined by the third determining sub-module 713 that the photograph on the current display interface changes.

In an embodiment, if there are a plurality of facial features in the photograph on the current display interface and the plurality of facial features correspond to a same preset threshold,
the second determining module 72 may include:
a fifth determining sub-module 721, configured to determine whether each of facial appearance values corresponding to the plurality of facial features is greater than the same preset threshold;
the acquiring module 73 may include:
   a first shooting sub-module 731, configured to shoot the photograph on the current display interface as a picture and storing the picture, if it is determined by the fifth determining sub-module 721 that each of the facial appearance values corresponding to the plurality of facial features is greater than the same preset threshold.

Fig. 9 is a block diagram showing further another device for automatically capturing a photograph according to an example embodiment. As shown in Fig. 9, on the basis of above embodiment shown in Fig. 7 or Fig. 8, in an embodiment, if there are a plurality of facial features in the photograph on the current display interface and each of the plurality of facial features corresponds to a respective preset threshold,
the second determining module 72 may include:
a sixth determining sub-module 722, configured to determine for each facial feature whether the facial appearance value of the facial feature is greater than the preset threshold corresponding to the facial feature;
the acquiring module 73 may include:
   a second shooting sub-module 732, configured to shoot the photograph on the current display interface as a picture and storing the picture, if it is determined by the sixth determining sub-module 722 that the facial appearance value of each facial feature is greater than the preset threshold corresponding to the facial feature.

According to the invention, the device further include:
a third determining module 74, configured to determine a first preset number of facial appearance values of a user corresponding to the facial feature determined by the first determining module 71 at different angles;
a fourth determining module 75, configured to determine a second preset number of facial appearance values from the first preset number of facial appearance values determined by the third determining module 74, in which the second preset number of facial appearance values are top ranked;
a fifth determining module 76, configured to determine the preset threshold according to the second preset number of facial appearance values determined by the fourth determining module 75.

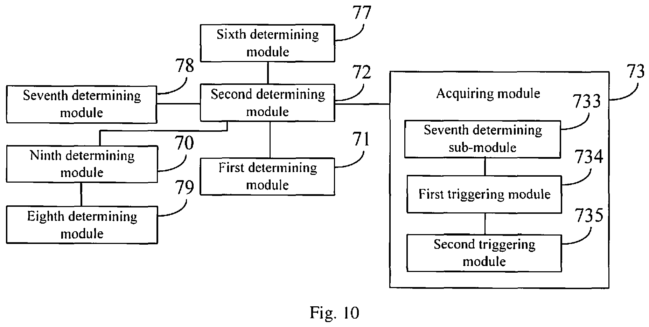

Fig. 10 is a block diagram showing yet another device for automatically capturing a photograph according to an example embodiment. As shown in Fig. 10, on the basis of any embodiment shown in Fig. 7 to Fig. 9, in an embodiment, the device may further include:
a sixth determining module 77, configured to determine to trigger the preset threshold corresponding to the facial feature if it is determined to activate an mode for determining a facial appearance threshold, such that the second determining module 72 can determine whether the facial appearance value is greater than the preset threshold corresponding to the facial feature; or
a seventh determining module 78, configured to determine to trigger the preset threshold corresponding to the facial feature if it is determined to activate a camera to start capturing a photograph, such that the second determining module 72 can determine whether the facial appearance value is greater than the preset threshold corresponding to the facial feature; or
an eighth determining module 79, configured to search whether the preset threshold corresponding to the facial feature is stored after a facial appearance value of the facial feature is calculated;
a ninth determining module 70, configured to determine to trigger the preset threshold corresponding to the facial feature if it is determined by the eighth determining module 79 that the preset threshold corresponding to the facial feature is not stored, such that the second determining module 72 can determine whether the facial appearance value is greater than a preset threshold corresponding to the facial feature.

In an embodiment, the acquiring module 73 may include:
a seventh determining sub-module 733, configured to determine a type of the photograph on the display interface;
a first triggering sub-module 734, configured to trigger a shooting module for acquiring the photograph on the display interface, if it is determined by the seventh determining sub-module 733 that the type of the photograph is an image captured by the shooting module; and
a second triggering sub-module 735, configured to trigger a screenshot operation of the video decoding module for acquiring the photograph on the display interface, if it is determined by the seventh determining sub-module 733 that the type of the photograph is a video played by the video decoding module

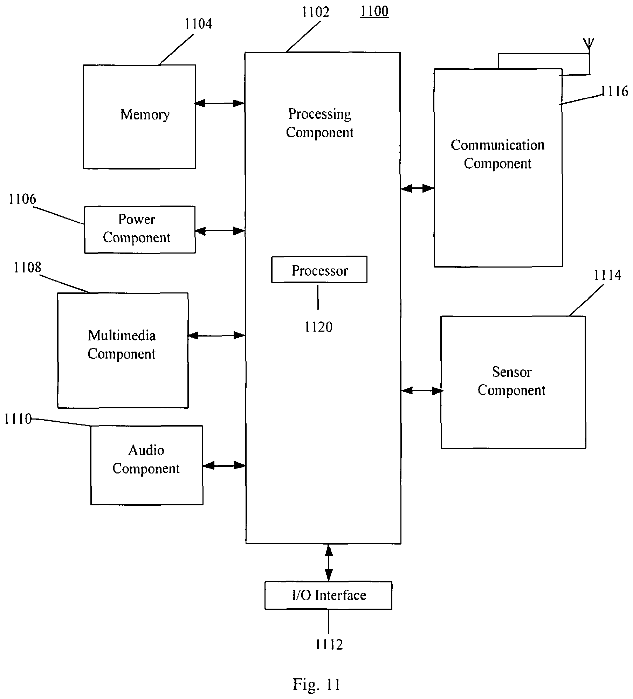

Fig. 11 is a block diagram showing a device suitable for automatically capturing a photograph according to an example embodiment. For example, the device 1100 may be a mobile phone, a computer, a vidicon, a camera, a digital broadcast terminal, a messaging device, a gaming console, a tablet, a medical device, exercise equipment, a personal digital assistant, and the like.

Referring to Fig. 11, the device 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the device 1100, such as the operations associated with display, telephone calls, data communications, camera operations, and recording operations. The processing component 1102 may include one or more processors 1120 to execute instructions to perform all or part of the steps in the above described methods. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the device 1100. Examples of such data include instructions for any applications or methods operated on the device 1100, contact data, phonebook data, messages, pictures, video, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the device 1100. The power component 1106 may include a power management system, one or more power sources, and any other components associated with the generation, management, and distribution of power in the device 1100.

The multimedia component 1108 includes a screen providing an output interface between the device 1100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1108 includes a front camera and/or a rear camera. The front camera and/or the rear camera may receive an external multimedia datum while the device 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone (MIC) configured to receive an external audio signal when the device 1100 is in an operation mode, such as a call mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1114 includes one or more sensors to provide status assessments of various aspects of the device 1100. For instance, the sensor component 1114 may detect an open/closed status of the device 1100, relative positioning of components, e.g., the display and the keypad, of the device 1100, a change in position of the device 1100 or a component of the device 1100, a presence or absence of user contact with the device 1100, an orientation or an acceleration/deceleration of the device 1100, and a change in temperature of the device 1100. The sensor component 1114 may include a proximity sensor configured to detect the presence of nearby objects without any physical contact. The sensor component 1114 may also include a light sensor, such as a CMOS or CCD image sensor, for use in imaging applications. In some embodiments, the sensor component 1114 may also include an accelerometer sensor, a gyroscope sensor, a magnetic sensor, a pressure sensor, or a temperature sensor.

The communication component 1116 is configured to facilitate communication, wired or wirelessly, between the device 1100 and other devices. The device 1100 can access a wireless network based on a communication standard, such as WiFi, 2G, or 3G, or a combination thereof. In one example embodiment, the communication component 1116 receives a broadcast signal or broadcast associated information from an external broadcast management system via a broadcast channel. In one example embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the device 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer-readable storage medium including instructions, such as included in the memory 1104, executable by the processor 1120 in the device 1100, for performing the above-described methods. For example, the non-transitory computer-readable storage medium may be a ROM, a RAM, a CD-ROM, a magnetic tape, a floppy disc, an optical data storage device, and the like.

## Claims

1. A method for automatically capturing a photograph, comprising:
determining (S101; S301; S401; S601) a facial feature in a photograph on a current display interface, and calculating a facial appearance value corresponding to the facial feature, if it is determined to trigger an appearance value calculation, wherein the facial feature is obtained by a face detection algorithm and the facial appearance value corresponding to the facial feature is calculated according to an appearance value algorithm, wherein a type of the photograph is an image captured by a shooting module or a video played by a video decoding module;
determining (S102; S602) whether the facial appearance value is greater than a preset threshold corresponding to the facial feature;
if it is determined that the facial appearance value is greater than the preset threshold, acquiring and storing (S103) the photograph on the display interface,
wherein the method further comprises:
determining (S501) a first preset number of facial appearance values of a person corresponding to the facial feature, wherein the first preset number of facial appearance values correspond to different angles of face of the person, respectively; the person is a figure in the photograph on the display interface if the type of the photograph is the image captured by the shooting module, and the person is a character in the photograph on the display interface if the type of the photograph is the video played by the video decoding module;
determining (S502) a second preset number of facial appearance values from the first preset number of facial appearance values, wherein the second preset number of facial appearance values are top ranked;
determining (S503) the preset threshold according to the second preset number of facial appearance values.

2. The method according to claim 1, wherein determining to trigger an appearance value calculation comprises:
determining (S201) whether an appearance value calculating period is reached according to a preset frequency for triggering the appearance value calculation;
determining (S202)to trigger the appearance value calculation if the appearance value calculating period is reached; or
determining (S211) whether the photograph on the current display interface changes;
determining (S212) to trigger the appearance value calculation if it is determined that the photograph on the current display interface changes.

3. The method according to claim 1, wherein if there are a plurality of facial features in the photograph on the current display interface and the plurality of facial features correspond to a same preset threshold,
determining (S102; S602) whether the facial appearance value is greater than a preset threshold corresponding to the facial feature comprises:
determining (S302) whether each of facial appearance values corresponding to the plurality of facial features is greater than the same preset threshold;
storing a pre-shot picture if the facial appearance value is greater than the preset threshold comprises:
shooting (S303) the photograph on the current display interface as a picture and storing the picture, if each of the facial appearance values corresponding to the plurality of facial features is greater than the same preset threshold.

4. The method according to claim 1, wherein if there are a plurality of facial features in the photograph on the current display interface and each of the plurality of facial features corresponds to a respective preset threshold,
determining (S102; S602) whether the facial appearance value is greater than a preset threshold corresponding to the facial feature comprises:
determining (S402) for each facial feature whether the facial appearance value of the facial feature is greater than the preset threshold corresponding to the facial feature;
acquiring and storing (103) the photograph on the current display interface if the facial appearance value is greater than the preset threshold comprises:
shooting (S403) the photograph on the current display interface as a picture and storing the picture, if the facial appearance value of each facial feature is greater than the preset threshold corresponding to the facial feature.

5. The method according to claim 1, further comprising:
determining to trigger the preset threshold corresponding to the facial feature, if it is determined to activate an mode for determining a facial appearance threshold; or
determining to trigger the preset threshold corresponding to the facial feature, if it is determined to activate a camera to start capturing a photograph; or
searching whether the preset threshold corresponding to the facial feature is stored after a facial appearance value of the facial feature is calculated, and determining to trigger the preset threshold corresponding to the facial feature, if it is determined that the preset threshold corresponding to the facial feature is not stored.

6. A device for automatically capturing a photograph, comprising:
a first determining module (71), configured to determine a facial feature in a photograph on a current display interface and calculate a facial appearance value corresponding to the facial feature, if it is determined to trigger an appearance value calculation, wherein the facial feature is obtained by a face detection algorithm and the facial appearance value corresponding to the facial feature is calculated according to an appearance value algorithm, wherein a type of the photograph is an image captured by a shooting module or a video played by a video decoding module;
a second determining module (72), configured to determine whether the facial appearance value determined by the first determining module (71) is greater than a preset threshold corresponding to the facial feature; and
an acquiring module (73), configured to, if it is determined that the facial appearance value is greater than the preset threshold, acquire and store the photograph on the display interface,
the device further comprising:
a third determining module (74), configured to determine a first preset number of facial appearance values of a person corresponding to the facial feature determined by the first determining module (71); wherein the first preset number of facial appearance values correspond to different angles of face of the person, respectively; the person is a figure in the photograph on the display interface if the type of the photograph is the image captured by the shooting module, and the person is a character in the photograph on the display interface if the type of the photograph is the video played by the video decoding module;
a fourth determining module (75), configured to determine a second preset number of facial appearance values from the first preset number of facial appearance values determined by the third determining module (74), wherein the second preset number of facial appearance values are top ranked;
a fifth determining module (76), configured to determine the preset threshold according to the second preset number of facial appearance values determined by the fourth determining module (75).

7. The device according to claim 6, wherein the first determining module (71) comprises:
a first determining sub-module (711), configured to determine whether an appearance value calculating period is reached according to a preset frequency for triggering the appearance value calculation;
a second determining sub-module (712), configured to determine to trigger the appearance value calculation if it is determined by the first determining sub-module (711) that the appearance value calculating period is reached; or
a third determining sub-module (713), configured to determine whether the photograph on the current display interface changes;
a fourth determining sub-module (714), configured to determine to trigger the appearance value calculation if it is determined by the third determining sub-module (713) that the photograph on the current display interface changes.

8. The device according to claim 6, wherein if there are a plurality of facial features in the photograph on the current display interface and the plurality of facial features correspond to a same preset threshold,
the second determining module (72) comprises:
a fifth determining sub-module (721), configured to determine whether each of facial appearance values corresponding to the plurality of facial features is greater than the same preset threshold;
the acquiring module (73) comprises:
a first shooting sub-module (731), configured to shoot the photograph on the current display interface as a picture and storing the picture, if it is determined by the fifth determining sub-module (721) that each of the facial appearance values corresponding to the plurality of facial features is greater than the same preset threshold.

9. The device according to claim 6, wherein if there are a plurality of facial features in the photograph on the current display interface and each of the plurality of facial features corresponds to a respective preset threshold,
the second determining module (72) comprises:
a sixth determining sub-module (722), configured to determine for each facial feature whether the facial appearance value of the facial feature is greater than the preset threshold corresponding to the facial feature;
the acquiring module (73) comprises:
a second shooting sub-module (732), configured to shoot the photograph on the current display interface as a picture and storing the picture, if it is determined by the sixth determining sub-module (722) that the facial appearance value of each facial feature is greater than the preset threshold corresponding to the facial feature.

10. The device according to claim 6, further comprising:
a sixth determining module (77), configured to determine to trigger the preset threshold corresponding to the facial feature, if it is determined to activate an mode for determining a facial appearance threshold; or
a seventh determining module (78), configured to determine to trigger the preset threshold corresponding to the facial feature, if it is determined to activate a camera to start capturing a photograph; or
an eighth determining module (79), configured to search whether the preset threshold corresponding to the facial feature is stored after a facial appearance value of the facial feature is calculated;
a ninth determining module (70), configured to determine to trigger the preset threshold corresponding to the facial feature, if it is determined by the eighth determining module (79) that the preset threshold corresponding to the facial feature is not stored.

11. An electronic device, comprising:
a processor; and
a memory, configured to store an instruction executable by the processor;
wherein the processor is configured to execute the instruction stored in the memory so as to perform the method for automatically capturing a photograph according to any one of claims 1-5.

## Patentansprüche

1. Verfahren zum automatischen Aufnehmen einer Fotografie, umfassend:
Bestimmen (S101; S301; S401; S601) eines Gesichtsmerkmals in einer Fotografie auf einer aktuellen Anzeigeoberfläche und Berechnen eines Gesichtsaussehenswerts, der dem Gesichtsmerkmal entspricht, wenn bestimmt wird, eine Aussehenswertberechnung auszulösen, wobei das Gesichtsmerkmal durch einen Gesichtserkennungsalgorithmus erlangt wird und der Gesichtsaussehenswert, der dem Gesichtsmerkmal entspricht, gemäß einem Aussehenswertalgorithmus berechnet wird, wobei ein Typ der Fotografie ein Bild ist, das durch ein Aufnahmemodul erfasst wird, oder ein Video, das durch ein Videodecodiermodul abgespielt wird;
Bestimmen (S102; S602), ob der Gesichtsaussehenswert größer ist als ein voreingestellter Schwellenwert, der dem Gesichtsmerkmal entspricht;
wenn bestimmt wird, dass der Gesichtsaussehenswert größer ist als der voreingestellte Schwellenwert ist, Erfassen und Speichern (S103) der Fotografie auf der Anzeigeoberfläche,
wobei das Verfahren ferner Folgendes umfasst:
Bestimmen (S501) einer ersten voreingestellten Anzahl von Gesichtsaussehenswerten einer Person, die dem Gesichtsmerkmal entsprechen, wobei die erste voreingestellte Anzahl von Gesichtsaussehenswerten jeweils verschiedenen Gesichtswinkeln der Person entspricht; die Person eine Figur in der Fotografie auf der Anzeigeoberfläche ist, wenn der Typ der Fotografie das durch das Aufnahmemodul aufgenommene Bild ist, und die Person ein Charakter in der Fotografie auf der Anzeigeoberfläche ist, wenn der Typ der Fotografie das Video ist, das durch das Videodecodiermodul abgespielt wird;
Bestimmen (S502) einer zweiten voreingestellten Anzahl von Gesichtsaussehenswerten aus der ersten voreingestellten Anzahl von Gesichtsaussehenswerten, wobei die zweite voreingestellte Anzahl von Gesichtsaussehenswerten am höchsten eingestuft ist;
Bestimmen (S503) des voreingestellten Schwellenwerts gemäß der zweiten voreingestellten Anzahl von Gesichtsaussehenswerten.

2. Verfahren nach Anspruch 1, wobei ein Bestimmen eines Auslösens einer Aussehenswertberechnung Folgendes umfasst:
Bestimmen (S201), ob ein Berechnungszeitraum für den Aussehenswert gemäß einer voreingestellten Häufigkeit zum Auslösen der Aussehenswertberechnung erreicht ist;
Bestimmen (S202), die Aussehenswertberechnung auszulösen, wenn die Aussehenswert-Berechnungsperiode erreicht ist; oder
Bestimmen (S211), ob sich die Fotografie auf der aktuellen Anzeigeoberfläche ändert;
Bestimmen (S212), die Aussehenswertberechnung auszulösen, wenn bestimmt wird, dass sich die Fotografie auf der aktuellen Anzeigeoberfläche ändert.

3. Verfahren nach Anspruch 1, wobei, wenn es eine Vielzahl von Gesichtsmerkmalen in der Fotografie auf der aktuellen Anzeigeoberfläche gibt und die Vielzahl von Gesichtsmerkmalen einem gleichen voreingestellten Schwellenwert entspricht,
ein Bestimmen (S102; S602), ob der Gesichtsaussehenswert größer ist als ein voreingestellter Schwellenwert, der dem Gesichtsmerkmal entspricht, Folgendes umfasst:
Bestimmen (S302), ob jeder der Gesichtsaussehenswerte, die der Vielzahl von Gesichtsmerkmalen entsprechen, größer ist als der gleiche voreingestellte Schwellenwert;
ein Speichern eines vorab aufgenommenen Bilds, wenn der Gesichtsaussehenswert größer ist als der voreingestellte Schwellenwert, Folgendes umfasst:
Aufnehmen (S303) der Fotografie auf der aktuellen Anzeigeoberfläche als ein Bild und Speichern des Bilds, wenn jeder der Gesichtsaussehenswerte, die der Vielzahl von Gesichtsmerkmalen entsprechen, größer ist als der gleiche voreingestellte Schwellenwert.

4. Verfahren nach Anspruch 1, wobei, wenn es eine Vielzahl von Gesichtsmerkmalen in der Fotografie auf der aktuellen Anzeigeoberfläche gibt und jedes der Vielzahl von Gesichtsmerkmalen einem jeweiligen voreingestellten Schwellenwert entspricht,
ein Bestimmen (S102; S602), ob der Gesichtsaussehenswert größer ist als ein voreingestellter Schwellenwert, der dem Gesichtsmerkmal entspricht, Folgendes umfasst:
Bestimmen (S402) für jedes Gesichtsmerkmal, ob der Gesichtsaussehenswert des Gesichtsmerkmals größer ist als der voreingestellte Schwellenwert, der dem Gesichtsmerkmal entspricht;
ein Aufnehmen und Speichern (103) der Fotografie auf der aktuellen Anzeigeoberfläche, wenn der Gesichtsaussehenswert größer ist als der voreingestellte Schwellenwert, Folgendes umfasst:
Aufnehmen (S403) der Fotografie auf der aktuellen Anzeigeoberfläche als Bild und Speichern des Bilds, wenn der Gesichtsaussehenswert von jedem Gesichtsmerkmal größer ist als der voreingestellte Schwellenwert, der dem Gesichtsmerkmal entspricht.

5. Verfahren nach Anspruch 1, ferner umfassend:
Bestimmen, den voreingestellten Schwellenwert auszulösen, der dem Gesichtsmerkmal entspricht, wenn bestimmt wird, einen Modus zum Bestimmen eines Gesichtsaussehen-Schwellenwerts zu aktivieren; oder
Bestimmen, den voreingestellten Schwellenwert auszulösen, der dem Gesichtsmerkmal entspricht, wenn bestimmt wird, eine Kamera zu aktivieren, um ein Aufnehmen einer Fotografie zu beginnen; oder
Suchen, ob der voreingestellte Schwellenwert, der dem Gesichtsmerkmal entspricht, gespeichert ist, nachdem ein Gesichtsaussehenswert des Gesichtsmerkmals berechnet wurde, und Bestimmen, den voreingestellten Schwellenwert auszulösen, der dem Gesichtsmerkmal entspricht, wenn bestimmt wird, dass der voreingestellte Schwellenwert, der dem Gesichtsmerkmal entspricht, nicht gespeichert ist.

6. Vorrichtung zum automatischen Aufnehmen einer Fotografie, umfassend:
ein erstes Bestimmungsmodul (71), das konfiguriert ist, um ein Gesichtsmerkmal in einer Fotografie auf einer aktuellen Anzeigeoberfläche zu bestimmen und einen Gesichtsaussehenswert zu berechnen, der dem Gesichtsmerkmal entspricht, wenn bestimmt wird, eine Aussehenswertberechnung auszulösen, wobei das Gesichtsmerkmal durch einen Gesichtserkennungsalgorithmus erlangt wird und der Gesichtsaussehenswert, der dem Gesichtsmerkmal entspricht, gemäß einem Aussehenswertalgorithmus berechnet wird, wobei ein Typ der Fotografie ein Bild ist, das durch ein Aufnahmemodul erfasst wird, oder ein Video, das durch ein Videodecodiermodul abgespielt wird;
ein zweites Bestimmungsmodul (72), das konfiguriert ist, um zu bestimmen, ob der durch das erste Bestimmungsmodul (71) bestimmte Gesichtsaussehenswert größer ist als ein voreingestellter Schwellenwert, der dem Gesichtsmerkmal entspricht; und
ein Erfassungsmodul (73), das konfiguriert ist, um, wenn bestimmt wird, dass der Gesichtsaussehenswert größer ist als der voreingestellte Schwellenwert, die Fotografie zu erfassen und auf der Anzeigeoberfläche zu speichern,
die Vorrichtung ferner umfassend:
ein drittes Bestimmungsmodul (74), das konfiguriert ist, um eine erste voreingestellte Anzahl von Gesichtsaussehenswerten einer Person zu bestimmen, die dem durch das erste Bestimmungsmodul (71) bestimmten Gesichtsmerkmal entsprechen; wobei die erste voreingestellte Anzahl von Gesichtsaussehenswerten jeweils verschiedenen Gesichtswinkeln der Person entspricht; die Person eine Figur in der Fotografie auf der Anzeigeoberfläche ist, wenn der Typ der Fotografie das durch das Aufnahmemodul aufgenommene Bild ist, und die Person ein Charakter in der Fotografie auf der Anzeigeoberfläche ist, wenn der Typ der Fotografie das Video ist, das durch das Videodecodiermodul abgespielt wird;
ein viertes Bestimmungsmodul (75), das konfiguriert ist, um eine zweite voreingestellte Anzahl von Gesichtsaussehenswerten aus der ersten voreingestellten Anzahl von Gesichtsaussehenswerten zu bestimmen, die durch das dritte Bestimmungsmodul (74) bestimmt wurden, wobei die zweite voreingestellte Anzahl von Gesichtsaussehenswerten am höchsten eingestuft ist;
ein fünftes Bestimmungsmodul (76), das konfiguriert ist, um den voreingestellten Schwellenwert gemäß der zweiten voreingestellten Anzahl von Gesichtsaussehenswerten zu bestimmen, die von dem vierten Bestimmungsmodul (75) bestimmt werden.

7. Vorrichtung nach Anspruch 6, wobei das erste Bestimmungsmodul (71) Folgendes umfasst:
ein erstes Bestimmungsuntermodul (711), das konfiguriert ist, um zu bestimmen, ob eine Aussehenswert-Berechnungsperiode gemäß einer voreingestellten Häufigkeit zum Auslösen der Aussehenswertberechnung erreicht ist;
ein zweites Bestimmungsuntermodul (712), das konfiguriert ist, um zu bestimmen, die Aussehenswertberechnung auszulösen, wenn durch das erste Bestimmungsuntermodul (711) bestimmt wird, dass die Aussehenswert-Berechnungsperiode erreicht ist; oder
ein drittes Bestimmungsuntermodul (713), das konfiguriert ist, um zu bestimmen, ob sich die Fotografie auf der aktuellen Anzeigeoberfläche ändert;
ein viertes Bestimmungsuntermodul (714), das konfiguriert ist, um zu bestimmen, die Aussehenswertberechnung auszulösen, wenn durch das dritte Bestimmungsuntermodul (713) bestimmt wird, dass sich die Fotografie auf der aktuellen Anzeigeoberfläche ändert.

8. Vorrichtung nach Anspruch 6, wobei, wenn es eine Vielzahl von Gesichtsmerkmalen in der Fotografie auf der aktuellen Anzeigeoberfläche gibt und die Vielzahl von Gesichtsmerkmalen einem gleichen voreingestellten Schwellenwert entspricht,
das zweite Bestimmungsmodul (72) Folgendes umfasst:
ein fünftes Bestimmungsuntermodul (721), das konfiguriert ist, um zu bestimmen, ob jeder der Gesichtsaussehenswerte, die der Vielzahl von Gesichtsmerkmalen entsprechen, größer ist als der gleiche voreingestellte Schwellenwert;
das Erfassungsmodul (73) Folgendes umfasst:
ein erstes Aufnahmeuntermodul (731), das konfiguriert ist, um die Fotografie auf der aktuellen Anzeigeoberfläche als ein Bild aufzunehmen und das Bild zu speichern, wenn durch das fünfte Bestimmunguntermodul (721) bestimmt wird, dass jeder der Gesichtsaussehenswerte, die der Vielzahl von Gesichtsmerkmalen entsprechen, größer ist als der gleiche voreingestellte Schwellenwert.

9. Vorrichtung nach Anspruch 6, wobei, wenn es eine Vielzahl von Gesichtsmerkmalen in der Fotografie auf der aktuellen Anzeigeoberfläche gibt und jedes der Vielzahl von Gesichtsmerkmalen einem jeweiligen voreingestellten Schwellenwert entspricht,
das zweite Bestimmungsmodul (72) Folgendes umfasst:
ein sechstes Bestimmungsuntermodul (722), das konfiguriert ist, um für jedes Gesichtsmerkmal zu bestimmen, ob der Gesichtsaussehenswert des Gesichtsmerkmals größer ist als der voreingestellte Schwellenwert, der dem Gesichtsmerkmal entspricht;
das Erfassungsmodul (73) Folgendes umfasst:
ein zweites Aufnahmeuntermodul (732), das konfiguriert ist, um die Fotografie auf der aktuellen Anzeigeoberfläche als ein Bild aufzunehmen und das Bild zu speichern, wenn durch das sechste Bestimmungsuntermodul (722) bestimmt wird, dass der Gesichtsaussehenswert von jedem Gesichtsmerkmal größer ist als der voreingestellte Schwellenwert, der dem Gesichtsmerkmal entspricht.

10. Vorrichtung nach Anspruch 6, ferner umfassend:
ein sechstes Bestimmungsmodul (77), das konfiguriert ist, um zu bestimmen, den voreingestellten Schwellenwert auszulösen, der dem Gesichtsmerkmal entspricht, wenn bestimmt wird, einen Modus zum Bestimmen eines Gesichtsaussehen-Schwellenwerts zu aktivieren; oder
ein siebtes Bestimmungsmodul (78), das konfiguriert ist, um zu bestimmen, den voreingestellten Schwellenwert auszulösen, der dem Gesichtsmerkmal entspricht, wenn bestimmt wird, eine Kamera zu aktivieren, um ein Aufnehmen einer Fotografie zu beginnen; oder
ein achtes Bestimmungsmodul (79), das konfiguriert ist, um zu suchen, ob der voreingestellte Schwellenwert, der dem Gesichtsmerkmal entspricht, gespeichert ist, nachdem ein Gesichtsaussehenswert des Gesichtsmerkmals berechnet wurde;
ein neuntes Bestimmungsmodul (70), das konfiguriert ist, um zu bestimmen, den voreingestellten Schwellenwert, der dem Gesichtsmerkmal entspricht, auszulösen, wenn durch das achte Bestimmungsmodul (79) bestimmt wird, dass der voreingestellte Schwellenwert, der dem Gesichtsmerkmal entspricht, nicht gespeichert ist.

11. Elektronische Vorrichtung, umfassend:
einen Prozessor; und
einen Speicher, der konfiguriert ist, um einen von dem Prozessor ausführbaren Befehl zu speichern;
wobei der Prozessor konfiguriert ist, um den in dem Speicher gespeicherten Befehl auszuführen, um das Verfahren zum automatischen Aufnehmen einer Fotografie nach einem der Ansprüche 1-5 durchzuführen.

## Revendications

1. Procédé de capture automatique d'une photographie, comprenant le fait de :
déterminer (S101 ; S301 ; S401 ; S601) une caractéristique faciale dans une photographie sur une interface d'affichage en cours, et calculer une valeur d'apparence faciale correspondant à la caractéristique faciale, s'il est déterminé qu'il convient de déclencher un calcul de valeur d'apparence, dans laquelle la caractéristique faciale est obtenue par un algorithme de détection de visage et la valeur d'apparence faciale correspondant à la caractéristique faciale est calculée selon un algorithme de valeur d'apparence, dans lequel un type de la photographie est une image capturée par un module de prise de vue ou une vidéo lue par un module de décodage vidéo ;
déterminer (S102 ; S602) si la valeur d'apparence faciale est supérieure à un seuil prédéfini correspondant à la caractéristique faciale ;
s'il est déterminé que la valeur d'apparence faciale est supérieure au seuil prédéfini, acquérir et stocker (S103) la photographie sur l'interface d'affichage ;
dans lequel le procédé comprend en outre le fait de :
déterminer (S501) un premier nombre prédéfini de valeurs d'apparence faciale d'une personne correspondant à la caractéristique faciale, dans lequel le premier nombre prédéfini de valeurs d'apparence faciale correspond à différents angles du visage de la personne, respectivement ; la personne est une silhouette dans la photographie sur l'interface d'affichage si le type de la photographie est l'image capturée par le module de prise de vue, et la personne est un personnage dans la photographie sur l'interface d'affichage si le type de la photographie est la vidéo lue par le module de décodage vidéo ;
déterminer (S502) un deuxième nombre prédéfini de valeurs d'apparence faciale à partir du premier nombre prédéfini de valeurs d'apparence faciale, dans lequel le deuxième nombre prédéfini de valeurs d'apparence faciale est classé au premier rang ;
déterminer (S503) le seuil prédéfini selon le deuxième nombre prédéfini de valeurs d'apparence faciale.

2. Procédé selon la revendication 1, dans lequel la détermination de la nécessité de déclencher un calcul de valeur d'apparence comprend le fait de :
déterminer (S201) si une période de calcul de valeur d'apparence est atteinte selon une fréquence prédéfinie du déclenchement du calcul de valeur d'apparence ;
déterminer (S202) qu'il convient de déclencher le calcul de valeur d'apparence si la période de calcul de valeur d'apparence est atteinte ; ou
déterminer (S211) si la photographie sur l'interface d'affichage en cours change ; et
déterminer (S212) qu'il convient de déclencher le calcul de valeur d'apparence s'il est déterminé que la photographie sur l'interface d'affichage en cours change.

3. Procédé selon la revendication 1, dans lequel, s'il existe une pluralité de caractéristiques faciales dans la photographie sur l'interface d'affichage en cours et si la pluralité de caractéristiques faciales correspond à un même seuil prédéfini,
le fait de déterminer (S102 ; S602) si la valeur d'apparence faciale est supérieure à un seuil prédéfini correspondant à la caractéristique faciale comprend le fait de :
déterminer (S302) si chacune des valeurs d'apparence faciale correspondant à la pluralité de caractéristiques faciales est supérieure au même seuil prédéfini ;
le fait de stocker une image avant prise de vue si la valeur d'apparence faciale est supérieure au seuil prédéfini comprend le fait de :
réaliser une prise de vue (S303) de la photographie sur l'interface d'affichage en cours en tant qu'une image et stocker l'image, si chacune des valeurs d'apparence faciale correspondant à la pluralité de caractéristiques faciales est supérieure au même seuil prédéfini.

4. Procédé selon la revendication 1, dans lequel, s'il existe une pluralité de caractéristiques faciales dans la photographie sur l'interface d'affichage en cours, et si chacune des caractéristiques faciales de la pluralité de caractéristiques faciales correspond à un seuil prédéfini respectif,
le fait de déterminer (S102 ; S602) si la valeur d'apparence faciale est supérieure à un seuil prédéfini correspondant à la caractéristique faciale comprend le fait de :
déterminer (S402), pour chaque caractéristique faciale, si la valeur d'apparence faciale de la caractéristique faciale est supérieure au seuil prédéfini correspondant à la caractéristique faciale ;
le fait d'acquérir et de stocker (103) la photographie sur l'interface d'affichage en cours si la valeur d'apparence faciale est supérieure au seuil prédéfini comprend le fait de :
réaliser une prise de vue (S403) de la photographie sur l'interface d'affichage en cours en tant qu'une image et stocker l'image, si la valeur d'apparence faciale de chaque caractéristique faciale est supérieure au seuil prédéfini correspondant à la caractéristique faciale.

5. Procédé selon la revendication 1, comprenant en outre le fait de :
déterminer qu'il convient de déclencher le seuil prédéfini correspondant à la caractéristique faciale, s'il est déterminé qu'il convient d'activer un mode permettant de déterminer un seuil d'apparence faciale ; ou
déterminer qu'il convient de déclencher le seuil prédéfini correspondant à la caractéristique faciale, s'il est déterminé qu'il convient d'activer un appareil photo afin de commencer à capturer une photographie ; ou
rechercher si le seuil prédéfini correspondant à la caractéristique faciale est stocké après qu'une valeur d'apparence faciale de la caractéristique faciale a été calculée, et déterminer qu'il convient de déclencher le seuil prédéfini correspondant à la caractéristique faciale, s'il est déterminé que le seuil prédéfini correspondant à la caractéristique faciale n'est pas stocké.

6. Dispositif de capture automatique d'une photographie, comprenant :
un premier module de détermination (71), configuré de manière à déterminer une caractéristique faciale dans une photographie sur une interface d'affichage en cours et à calculer une valeur d'apparence faciale correspondant à la caractéristique faciale, s'il est déterminé qu'il convient de déclencher un calcul de valeur d'apparence, dans laquelle la caractéristique faciale est obtenue par un algorithme de détection de visage, et la valeur d'apparence faciale correspondant à la caractéristique faciale est calculée selon un algorithme de valeur d'apparence, dans lequel un type de la photographie est une image capturée par un module de prise de vue ou une vidéo lue par un module de décodage vidéo ;
un deuxième module de détermination (72), configuré de manière à déterminer si la valeur d'apparence faciale déterminée par le premier module de détermination (71) est supérieure à un seuil prédéfini correspondant à la caractéristique faciale ; et
un module d'acquisition (73), configuré de manière à, s'il est déterminé que la valeur d'apparence faciale est supérieure au seuil prédéfini, acquérir et stocker la photographie sur l'interface d'affichage,
le dispositif comprenant en outre :
un troisième module de détermination (74), configuré de manière à déterminer un premier nombre prédéfini de valeurs d'apparence faciale d'une personne correspondant à la caractéristique faciale déterminée par le premier module de détermination (71) ; dans lequel le premier nombre prédéfini de valeurs d'apparence faciale correspond à différents angles du visage de la personne, respectivement ; la personne est une silhouette dans la photographie sur l'interface d'affichage si le type de la photographie est l'image capturée par le module de prise de vue, et la personne est un personnage dans la photographie sur l'interface d'affichage si le type de la photographie est la vidéo lue par le module de décodage vidéo ;
un quatrième module de détermination (75), configuré de manière à déterminer un deuxième nombre prédéfini de valeurs d'apparence faciale à partir du premier nombre prédéfini de valeurs d'apparence faciale déterminé par le troisième module de détermination (74), dans lequel le deuxième nombre prédéfini de valeurs d'apparence faciale est classé au premier rang ;
un cinquième module de détermination (76), configuré de manière à déterminer le seuil prédéfini selon le deuxième nombre prédéfini de valeurs d'apparence faciale déterminé par le quatrième module de détermination (75).

7. Dispositif selon la revendication 6, dans lequel le premier module de détermination (71) comprend :
un premier sous-module de détermination (711), configuré de manière à déterminer si une période de calcul de valeur d'apparence est atteinte selon une fréquence prédéfinie du déclenchement du calcul de valeur d'apparence ;
un deuxième sous-module de détermination (712), configuré de manière à déterminer qu'il convient de déclencher le calcul de valeur d'apparence s'il est déterminé, par le premier sous-module de détermination (711), que la période de calcul de valeur d'apparence est atteinte ; ou
un troisième sous-module de détermination (713), configuré de manière à déterminer si la photographie sur l'interface d'affichage en cours change ;
un quatrième sous-module de détermination (714), configuré de manière à déterminer qu'il convient de déclencher le calcul de valeur d'apparence s'il est déterminé, par le troisième sous-module de détermination (713), que la photographie sur l'interface d'affichage en cours change.

8. Dispositif selon la revendication 6, dans lequel, s'il existe une pluralité de caractéristiques faciales dans la photographie sur l'interface d'affichage en cours et si la pluralité de caractéristiques faciales correspond à un même seuil prédéfini,
le deuxième module de détermination (72) comprend :
un cinquième sous-module de détermination (721), configuré de manière à déterminer si chacune des valeurs d'apparence faciale correspondant à la pluralité de caractéristiques faciales est supérieure au même seuil prédéfini ;
le module d'acquisition (73) comprend :
un premier sous-module de prise de vue (731), configuré de manière à réaliser une prise de vue de la photographie sur l'interface d'affichage en cours en tant qu'une image, et stocker l'image, s'il est déterminé, par le cinquième sous-module de détermination (721), que chacune des valeurs d'apparence faciale correspondant à la pluralité de caractéristiques faciales est supérieure au même seuil prédéfini.

9. Dispositif selon la revendication 6, dans lequel, s'il existe une pluralité de caractéristiques faciales dans la photographie sur l'interface d'affichage en cours et si chacune de la pluralité de caractéristiques faciales correspond à un seuil prédéfini respectif,
le deuxième module de détermination (72) comprend :
un sixième sous-module de détermination (722), configuré de manière à déterminer, pour chaque caractéristique faciale, si la valeur d'apparence faciale de la caractéristique faciale est supérieure au seuil prédéfini correspondant à la caractéristique faciale ;
le module d'acquisition (73) comprend :
un deuxième sous-module de prise de vue (732), configuré de manière à réaliser une prise de vue de la photographie sur l'interface d'affichage en cours en tant qu'une image, et stocker l'image, s'il est déterminé, par le sixième sous-module de détermination (722), que la valeur d'apparence faciale de chaque caractéristique faciale est supérieure au seuil prédéfini correspondant à la caractéristique faciale.

10. Dispositif selon la revendication 6, comprenant en outre :
un sixième module de détermination (77), configuré de manière à déterminer qu'il convient de déclencher le seuil prédéfini correspondant à la caractéristique faciale, s'il est déterminé qu'il convient d'activer un mode permettant de déterminer un seuil d'apparence faciale ; ou
un septième module de détermination (78), configuré de manière à déterminer qu'il convient de déclencher le seuil prédéfini correspondant à la caractéristique faciale, s'il est déterminé qu'il convient d'activer un appareil photo afin de commencer à capturer une photographie ; ou
un huitième module de détermination (79), configuré de manière à rechercher si le seuil prédéfini correspondant à la caractéristique faciale est stocké après qu'une valeur d'apparence faciale de la caractéristique faciale a été calculée ;
un neuvième module de détermination (70), configuré de manière à déterminer qu'il convient de déclencher le seuil prédéfini correspondant à la caractéristique faciale, s'il est déterminé, par le huitième module de détermination (79), que le seuil prédéfini correspondant à la caractéristique faciale n'est pas stocké.

11. Dispositif électronique, comprenant :
un processeur ; et
une mémoire, configurée de manière à stocker une instruction exécutable par le processeur ;
dans lequel le processeur est configuré de manière à exécuter l'instruction stockée dans la mémoire de manière à mettre en oeuvre le procédé de capture automatique d'une photographie selon l'une quelconque des revendications 1 à 5.
